# EUROPÄISCHE PATENTSCHRIFT

(11) **EP 1 617 196 B1**
(45) Veröffentlichungstag und Bekanntmachung des Hinweises auf die Patenterteilung: **06.12.2006**
(21) Anmeldenummer: 05012397.5
(22) Anmeldetag: 09.06.2005
(51) Int. Cl.: G01L 5/16

(54) **Kraft- und/oder Momenten-Messaufnehmer**
Force and /or torque sensor
Capteur de forces et/ou de couples

(30) Priorität: 14.07.2004 DE 102004033926
(43) Veröffentlichungstag der Anmeldung: 18.01.2006
(73) Patentinhaber: GTM Gassmann Testing and Metrology GmbH, 64404 Bickenbach (DE)
(72) Erfinder: Gassmann, Helmut, Dr.-Ing., 64342 Seeheim-Jugenheim (DE); Achterfeldt, Klaus, Dipl.-Ing., 64689 Grasellenbach (DE)
(74) Vertreter: Katscher Habermann Patentanwälte

(56) Entgegenhaltungen:
- US-A- 5 063 788

## Beschreibung

Die Erfindung betrifft einen Kraft- und/oder Momenten-Messaufnehmer mit einem Verformungskörper, der mit Dehnungsmesselementen bestückt ist und einstückig mit mindestens einem Befestigungsflansch versehen ist, der eine stirnseitige Anlagefläche aufweist.

Derartige Kraft- und/oder Momenten-Messaufnehmer sind in unterschiedlichen Ausführungsformen bekannt. Als Dehnungsmesselemente werden üblicherweise Dehnungsmessstreifen verwendet, an denen bei einer Längenänderung infolge der Verformung des Verformungskörpers eine elektrische Widerstandsänderung auftritt, die in einer Messbrückenschaltung erfasst wird und ein zur Bestimmung der Kräfte bzw. Momente dienendes Signal liefert.

In vielen Einsatzfällen erfolgt die Kraft- und/oder Momenteneinleitung über Flächen, an denen der Kraft- und/oder Momenten-Messaufnehmer mit seinen Befestigungsflanschen angeschraubt wird, wobei der Verformungskörper oftmals als dünnwandiger Hohlzylinder ausgeführt ist, der mit den Dehnungsmesselementen, insbesondere Dehnungsmessstreifen bestückt ist und einstückig mit den nach außen vorspringenden Befestigungsflanschen ausgeführt ist. Die Befestigungsflansche weisen Schraubenbohrungen zur Aufnahme de Schrauben auf, mit denen die Befestigungsflansche an den krafteinleitenden Flächen angeschraubt werden.

Ein Kraft- und/oder Momenten - Messaufnehmer ist aus US -A- 5,063, 788 bekannt.

Da die Krafteinleitung über einen Durchmesser erfolgt, der größer ist als der Durchmesser des Verformungskörpers, werden Biegemomente in den Verformungskörper eingeleitet, die zu einer zusätzlichen Verformung der Dehnungsmesselemente führen und daher das Messsignal störend beeinflussen. Dieser Einfluss kann dadurch gemildert werden, dass der axiale Abstand zwischen dem Befestigungsflansch und den Dehnungsmesselementen vergrößert wird. Dadurch wird aber eine an sich unerwünschte Vergrößerung der Bauhöhe des Kraft- und/oder Momenten-Messaufnehmer herbeigeführt.

Aufgabe der Erfindung ist es daher, einen Kraft- und/oder Momenten-Messaufnehmer der eingangs genannten Gattung so auszubilden, dass über den Befestigungsflansch keine wesentlichen, das Messergebnis störenden Biegemomente in den Verformungskörper eingeleitet werden.

Diese Aufgabe wird erfindungsgemäß durch die Merkmale des Anspruchs 1 gelöst. Dem Befestigungsflansch ist ein loser Spannflanschring zugeordnet, dessen Innendurchmesser größer als der Außendurchmesser des Befestigungsflansches ist, und axial zwischen dem Spannflanschring und der Rückseite des Befestigungsflansches ist ein an einer Umfangsstelle geschlitzter Sprengring eingesetzt, der eione axiale Spannkraft vom Spannflanschring auf den Befestigungsflansch überträgt.

Der die Schraubenbohrungen zur Verbindung mit den anschließenden krafteinleitenden Flächen aufweisende Spannflanschring stellt hierbei ein vom Verformungskörper getrenntes, loses Bauteil dar. Die axiale Spannkraft wird ausschließlich über den Sprengring übertragen, so dass es ausreicht, dass der mit dem Verformungskörper einstückig ausgeführte Befestigungsflansch einen nur geringfügig größeren Durchmesse als der Verformungskörper aufweist.

Dadurch wird einerseits die Herstellung des Verformungskörpers vereinfacht und kostengünstiger gestaltet, weil der Durchmesser des Ausgangsmaterials nur nach dem Außendurchmesser des verhältnismäßig kleinen Befestigungsflansches gewählt werden muss. Insbesondere bewirkt die Krafteinleitung über den Sprengring aber, dass vom Befestigungsflansch auf den einstückig damit ausgeführten Verformungskörper praktisch kein Biegemoment übertragen wird. Auch bei verhältnismäßig geringer Bauhöhe des Kraft- und/oder Momenten-Messaufnehmers wird dadurch eine störende Beeinflussung des Messergebnisses vermieden.

Die Verwendung eines geschlitzten Sprengrings ermöglicht in einfacher Weise die Montage des Kraft- und/oder Momenten-Messaufnehmers. Der Spannflanschring, dessen Innendurchmesser größer ist als der Außendurchmesser des Befestigungsflansches, wird von außen über den jeweils zugeordneten Befestigungsflansch geschoben. Sodann wird der federnd aufgeweitete Sprengring eingelegt, der sich sowohl am Spannflanschring als auch am Befestigungsflansch abstützt. Der Spannflanschring, der vorzugsweise mehrere achsparallele Schraubenbohrungen aufweist, wird an den anschließenden Flächen angeschraubt und spannt dabei den Befestigungsflansch gegen diese Fläche.

Wenn der Verformungskörper ein dünnwandiger Hohlzylinder ist, kann der Befestigungsflansch einen von dem Hohlzylinder radial nach innen vorspringenden Innenflanschring aufweisen. Dadurch wird ohne Vergrößerung des Außendurchmessers eine für die Krafteinleitung günstige Breite des Befestigungsflansches erreicht.

Besonders zweckmäßig ist es, wenn mindestens ein Teil der stirnseitigen Anlagefläche des Befestigungsflansches in Verlängerung des den Verformungskörper bildenden Hohlzylinders liegt. Damit wird erreicht, dass die auf die stirnseitige Anlagefläche wirkende Axialkraft kein Biegemoment auf den Hohlzylinder ausübt.

Der Verformungskörper kann an seinen beiden Enden jeweils einstückig mit einem Befestigungsflansch versehen sein, dem jeweils in der vorher beschriebenen Weise ein loser Spannflanschring mit einem geschlitzten Sprengring zugeordnet ist.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 einen Kraft- und/oder Momenten-Messaufnehmer in einem Längsschnitt und
Fig. 2 einen Schnitt längs der Linie II-II in Fig. 1.

Der in der Zeichnung dargestellte Kraft- und/oder Momenten-Messaufnehmer weist als Verformungskörper 1 einen dünnwandigen Hohlzylinder auf, der die Messfeder des Kraft- und/oder Momenten-Messaufnehmer bildet. Der Verformungskörper ist an seiner Innenseite mit Dehnungsmesselementen 2 bestückt, nämlich Dehnungsmessstreifen, die in einer (nicht dargestellten) Messbrückenschaltung so zusammengeschaltet sind, dass die an den Dehnungsmessstreifen infolge einer Verformung auftretende elektrische Widerstandsänderung in Signale umgesetzt wird, aus denen die in den Verformungskörper 1 eingeleiteten Kräfte bzw. Momente bestimmt werden.

Der hohlzylindrische Verformungskörper 1 ist an seinen beiden Enden jeweils einstückig mit einem Befestigungsflansch 3 versehen, der radial über den Verformungskörper 1 vorspringt. Jeder Befestigungsflansch 3 liegt mit einer stirnseitigen Anlagefläche 4 an jeweils einer Fläche 5 bzw. 6 von krafteinleitenden Bauteilen 7 bzw. 8 an.

Jeder Befestigungsflansch 3 weist beispielsweise, jedoch nicht zwingend notwendig, einen von dem als Hohlzylinder ausgeführten Verformungskörper 1 radial nach innen vorspringenden Innenflanschring 9 auf.

Jedem der beiden Befestigungsflansche 3 ist ein konzentrischer Spannflanschring 10 zugeordnet, der mehrere achsparallele Schraubenbohrungen 11 bzw. 12 aufweist, in denen Befestigungsschrauben 13 bzw. 14 aufgenommen sind, mit denen der Spannflanschring 10 gegen die jeweils zugeordnete Fläche 5 bzw. 6 vorgespannt ist.

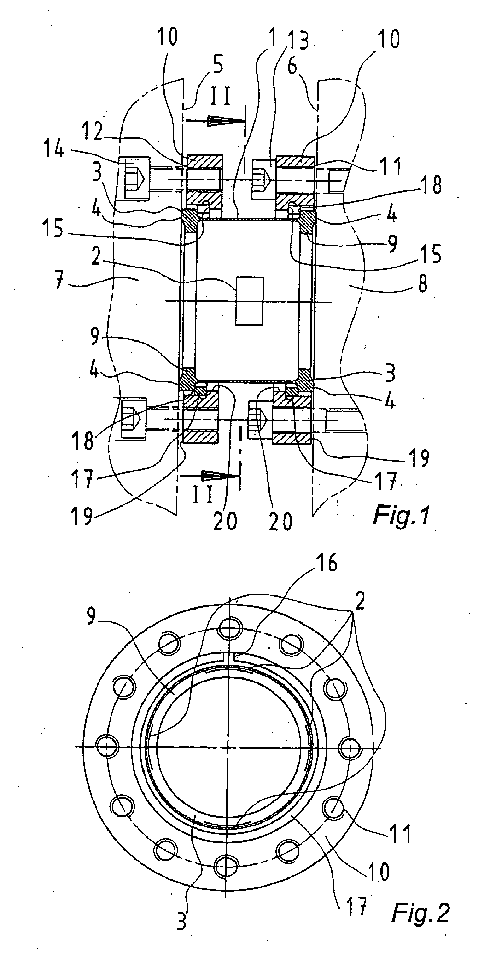

Jeder Spannflanschring 10 weist an seiner radial inneren Seite einen Absatz 15 auf, der einen an einer Umfangsstelle 16 (Fig. 2) geschlitzten, elastisch auffederbaren Sprengring 17 aufnimmt. Der Sprengring 17 liegt an der Rückseite 18 des Befestigungsflansches an, so dass eine axiale Spannkraft vom Spannflanschring 10 über den geschlitzten Sprengring 17 auf den Befestigungsflansch 3 übertragen wird. Der Befestigungsflansch 3 wird mit seiner stirnseitigen Anlagefläche 4 gegen die krafteinleitende Fläche 5 bzw. 6 gedrückt. Die der Fläche 5 bzw. 6 zugekehrte Stirnfläche 19 des Spannflanschrings 10 verbleibt hierbei im Abstand zu der benachbarten Fläche 5 bzw. 6.

Ein Teil der stirnseitigen Anlagefläche 4 des Befestigungsflansches 3 liegt in Verlängerung des als Hohlzylinder ausgeführten Verformungskörpers 1. Ein weiterer Teil der stirnseitigen Anlagefläche 4 des Befestigungsflansches 3 liegt auf dem gleichen Durchmesser wie die Berührungsfläche 18 zwischen dem Sprengring 17 und der Rückseite des Befestigungsflansches 3.

Der Innendurchmesser an der Innenbohrung 20 jedes Spannflanschrings 10 ist größer als der Außendurchmesser am Umfang 21 des Befestigungsflansches 3. Dies ermöglicht es, den Spannflanschring 10 von außen über den Befestigungsflansch 3 zu schieben, bevor der federnd aufgeweitete Sprengring 17 eingelegt wird.

## Patentansprüche

1. Kraft- und/oder Momenten-Messaufnehmer mit einem Verformungskörper (1), der mit Dehnungsmesselementen (2) bestückt ist und einstückig mit mindestens einem Befestigungsflansch (3) versehen ist, der eine stirnseitige Anlagefläche (4) aufweist, **dadurch gekennzeichnet, dass** dem Befestigungsflansch (3) ein loser Spannflanschring (10) zugeordnet ist, dessen Innendurchmesser größer als der Außendurchmesser des Befestigungsflansches (3) ist, und dass axial zwischen dem Spannflanschring (10) und der Rückseite (18) des Befestigungsflansches (3) ein an einer Umfangsstelle (16) geschlitzter Sprengring (17) eingesetzt ist, der eine axiale Spannkraft vom Spannflanschring (10) auf den Befestigungsflansch (3) überträgt.

2. Kraft- und/oder Momenten-Messaufnehmer nach Anspruch 1, **dadurch gekennzeichnet, dass** der Spannflanschring (10) mehrere achsparallele Schraubenbohrungen (11, 12) aufweist.

3. Kraft- und/oder Momenten-Messaufnehmer nach Anspruch 1, **dadurch gekennzeichnet, dass** der Verformungskörper (1) ein dünnwandiger Hohlzylinder ist und dass der Befestigungsflansch (3) einen von dem Hohlzylinder radial nach innen vorspringenden Innenflanschring (9) aufweist.

4. Kraft- und/oder Momenten-Messaufnehmer nach Anspruch 1, **dadurch gekennzeichnet, dass** der Verformungskörper (1) ein dünnwandiger Hohlzylinder ist und dass mindestens ein Teil der stirnseitigen Anlagefläche (4) des Befestigungsflansches (3) in Verlängerung des Hohlzylinders (1) liegt.

5. Kraft- und/oder Momenten-Messaufnehmer nach Anspruch 1, **dadurch gekennzeichnet, dass** mindestens ein Teil der stirnseitigen Anlagefläche (4) des Befestigungsflansches (3) auf dem gleichen Durchmesser liegt wie die Berührungsfläche zwischen dem Sprengring (17) und der Rückseite (18) des Befestigungsflansches (3).

6. Kraft- und/oder Momenten-Messaufnehmer nach Anspruch 1, **dadurch gekennzeichnet, dass** der Spannflanschring (10) an seiner radial inneren Seite einen den Sprengring (17) aufnehmenden Absatz (15) aufweist.

7. Kraft- und/oder Momenten-Messaufnehmer nach Anspruch 1, **dadurch gekennzeichnet, dass** der Verformungskörper an seinen beiden Enden jeweils einstückig mit einem Befestigungsflansch (3) versehen ist, dem jeweils ein loser Spannflanschring (10) mit einem geschlitzten Sprengring (17) zugeordnet ist.

## Claims

1. Force and/or torque measuring transducer having a deformation body (1) which is equipped with an extension measuring element (2) and is integrally provided with at least one fastening flange (3) which comprises an end-side bearing surface (4), **characterized in that** the fastening flange (3) is assigned a loose tensile flange ring (10) whose inner diameter is greater than the outer diameter of the fastening flange (3), and **in that** a slotted circlip (17), which transmits an axial tensile force from the tensile flange ring (10) to the fastening flange (3), is fitted at a circumferential position (16) axially between the tensile flange ring (10) and the rear side (18) of the fastening flange (3).

2. Force and/or torque measuring transducer according to Claim 1, **characterized in that** the tensile flange ring (10) comprises a plurality of axially parallel screw holes (11, 12).

3. Force and/or torque measuring transducer according to Claim 1, **characterized in that** the deformation body (1) is a thin-walled hollow cylinder, and **in that** the fastening flange (3) comprises an inner flange ring (9) projecting radially inwards from the hollow cylinder.

4. Force and/or torque measuring transducer according to Claim 1, **characterized in that** the deformation body (1) is a thin-walled hollow cylinder, and **in that** at least part of the end-side bearing surface (4) of the fastening flange (3) lies in extension of the hollow cylinder (1).

5. Force and/or torque measuring transducer according to Claim 1, **characterized in that** at least part of the end-side bearing surface (4) of the fastening flange (3) lies on the same diameter as the contact surface between the circlip (17) and the rear side (18) of the fastening flange (3).

6. Force and/or torque measuring transducer according to Claim 1, **characterized in that** the tensile flange ring (10) comprises on its radially inner side a shoulder (15) which receives the circlip (17).

7. Force and/or torque measuring transducer according to Claim 1, **characterized in that** the deformation body is integrally provided on each of its two ends with a fastening flange (3), which are respectively assigned a loose tensile flange ring (10) with a slotted circlip (17).

## Revendications

1. Capteur de forces et/ou de couples comprenant un corps de déformation (1) qui est muni d'éléments de mesure d'extension (2) et qui est pourvu d'au moins une bride de fixation (3) formée d'une seule pièce, qui présente une face d'appui (4), **caractérisé en ce que** l'on associe à la bride de fixation (3) une bague de bride de serrage lâche (10) dont le diamètre intérieur est supérieur au diamètre extérieur de la bride de fixation (3) et **en ce qu'**un jonc fendu (17) au niveau d'une zone périphérique (16) est inséré axialement entre la bague de bride de serrage (10) et le côté arrière (18) de la bride de fixation (3), lequel jonc transmet une force de serrage axiale de la bague de bride de serrage (10) à la bride de fixation (3).

2. Capteur de forces et/ou de couples selon la revendication 1, **caractérisé en ce que** la bague de bride de serrage (10) présente plusieurs alésages de vis d'axes parallèles (11, 12).

3. Capteur de forces et/ou de couples selon la revendication 1, **caractérisé en ce que** le corps de déformation (1) est un cylindre creux à paroi mince et **en ce que** la bride de fixation (3) présente une bague de bride intérieure (9) saillant radialement vers l'intérieur depuis le cylindre creux.

4. Capteur de forces et/ou de couples selon la revendication 1, **caractérisé en ce que** le corps de déformation (1) est un cylindre creux à paroi mince et **en ce qu'**au moins une partie de la surface d'appui frontale (4) de la bride de fixation (3) se situe dans le prolongement du cylindre creux (1).

5. Capteur de forces et/ou de couples selon la revendication 1, **caractérisé en ce qu'**au moins une partie de la surface d'appui frontale (4) de la bride de fixation (3) se situe sur le même diamètre que la surface de contact entre le jonc (17) et le côté arrière (18) de la bride de fixation (3).

6. Capteur de forces et/ou de couples selon la revendication 1, **caractérisé en ce que** la bague de bride de serrage (10) présente sur son côté radialement interne un retrait (15) recevant le jonc (17).

7. Capteur de forces et/ou de couples selon la revendication 1, **caractérisé en ce que** le corps de déformation est muni sur ses deux extrémités à chaque fois d'une bride de fixation (3) formée d'une seule pièce, à laquelle est associée une bague de bride de serrage lâche (10) avec un jonc fendu (17).
